# EUROPÄISCHE PATENTSCHRIFT

(11) **EP 0 786 485 B1**
(45) Veröffentlichungstag und Bekanntmachung des Hinweises auf die Patenterteilung: **19.04.2000**
(21) Anmeldenummer: 97101006.1
(22) Anmeldetag: 23.01.1997
(51) Int. Cl.: C08G 69/18, C08G 69/20

(54) **Kontinuierliches Verfahren für die aktivierte anionische Lactampolymerisation**
Continuous process for an activated anionic lactam polymerisation
Procédé continu pour la polymérisation activée anionique de lactame

(30) Priorität: 25.01.1996 DE 19603303
(43) Veröffentlichungstag der Anmeldung: 30.07.1997
(73) Patentinhaber: EMS-INVENTA AG, 8002 Zürich (CH)
(72) Erfinder: Schmid, Eduard, Dr., 7402 Bonaduz (CH); Eder, Roman, 70794 Filderstadt (DE)
(74) Vertreter: Hotz, Klaus, Dipl.-El.-Ing./ETH

(56) Entgegenhaltungen:
- EP-A- 0 438 762
- DE-A- 1 495 132
- DE-A- 1 495 848
- DE-A- 1 520 605
- DE-A- 2 230 732
- US-A- 3 575 938

## Beschreibung

Die Erfindung betrifft ein kontinuierliches Verfahren zur aktivierten anionischen Lactampolymerisation.

Polylactame oder Polyamide werden gemäss dem relevanten Stand der Technik meistens nach der Methode der sogenannten hydrolytischen Polymerisation aus Lactamen in der Schmelze bei Temperaturen von ca. 200 bis 320°C hergestellt, bei der zur Ringöffnung des Lactams oft eine Druckphase unter Wasserzusatz vorgeschaltet ist. Diese Reaktion verläuft langsam Das Reaktionsprodukt, bevorzugt ein Granulat, wird in einem Nachfolgeschritt, z.B. im Spritzguss- oder Extrusionsverfahren, zu Gebrauchsgegenständen umgeformt.

Auch starke Basen, die zur Bildung von Metall-Lactamat führen, können die Umwandlung von Lactam zum Polylactam bewirken Die entsprechende Polymerisationsreaktion verläuft langsam und wurde abgelöst durch die aktivierte anionische Lactampolymerisation, bei der die Reaktion stark beschleunigt ist und die Polymerisationstemperatur unter den Polymerschmelzpunkt abgesenkt werden kann. Bei diesem Verfahren werden der Lactamschmelze Katalysator und Aktivator getrennt zugefügt.

Üblicherweise liegt dabei der Katalysator als Feststoff, z.B. als Alkali- oder als Erdalkali-Lactamat vor. Auch viele der aktivierenden sogenannten Cokatalysatoren wie z.B. Carbodiimide und verkappte Isocyanate, sind Feststoffe. Der Nachteil der freien Isocyanate, von denen viele flüssig sind, ist ihre hohe Toxizität.

Die anionische Lactampolymerisation und die aktivierte anionische Lactampolymerisation sind z.B. beschrieben im Kunststoffhandbuch Band VI, Polyamide, C.Hanser Verlag. München.

Die aktivierte anionische Lactampolymerisation wird im allgemeinen zur Herstellung von sog. Gussteilen oder von grossvolumigem Halbzeug, wie Profilen, bevorzugt nach dem sogenannten 2-Topfverfahren durchgeführt.
Dabei werden volumengleiche, den Katalysator bzw. den Cokatalysator enthaltende Lactamschmelzen hergestellt, zusammengefügt und intensiv vermischt. Dadurch wird die Polymerisation gestartet und die Schmelze kann unmittelbar danach, z.B. im sogenannten Monomerguss-Verfahren, zum Fertigteil verarbeitet werden.
Dazu muss möglichst darauf geachtet werden, dass
- die Lactamschmelzen wasser- und sauerstofffrei sind,
- die Misch- und Verarbeitungsschritte unter Inertgas erfolgen und
- die aktivierte Schmelze sehr rasch verarbeitet wird,
   da sie nur eine beschränkte Verarbeitungszeit besitzt.

Um die rasche und homogene Verteilung des alkalischen Katalysators, z.B. von Magnesium- oder Natrium-Lactamat. in der Lactamschmelze zu erleichtern, wurden sogenannte Flüssigkatalysatorsysteme entwickelt.

In der ***DE-A-22 30 732*** wird dabei auf die Schwierigkeiten eingegangen, welche die Zugabe von Katalysator in fester Form, z.B. von Metall-Lactamat, zur aktivatorhaltigen Lactamschmelze verursacht. Sind Lösung und gleichmässiges Verteilen nicht gewährleistet, entsteht ein inhomogenes Polymer mit unakzeptabel ungleichmässigen Eigenschaften.
In ***DE-A-14 95 132*** wird zur Problemlösung eine bei 90°C flüssige Lösung von Alkali-Lactamat in Lactam vorgeschlagen, die zusätzlich 0,3 bis 5,0 Gew.% eines schwerflüchtigen Amins enthält.

Eine Katalysatorlösung von Metall-Lactamat in einem N-disubstituierten Carbonsäureamid, insbesondere in N-Methylpyrrolidon, ist in der ***US-A-3,575,938*** beschrieben. Die verbesserte Zugabe und Verteilung dieser Katalysatorlösung in eine aktivierte Lactamschmelze erlaubt auch die Herstellung mineralgefüllter Produkte.

Nach der Lehre der bereits zitierten ***DE 22 30 732*** muss die das Verfahren störende Krustenbildung, die Katalysatorlösungen aus Alkali-Lactamat in 2-Pyrrolidon rasch zeigen, durch Zugabe höherer Alkohole verhindert werden.

In der ***EP-A-04 38 762*** sind Katalysatorlösungen mit hoher Lagerstabilität auch bei tiefen Temperaturen beschrieben, die einen raschen Umsatz ermöglichen und zu Polyamid mit relativ niedrigem Restgehalt an Extrakt führen. Sie bestehen aus Lactam, 2-Pyrrolidon, und weiteren Zusätzen, wie speziellen Glykolen, Kohlenwasserstoffen und gegebenenfalls Aminen, die die Eigenschaften des Polymeren beeinflussen.

Im zitierten Stand der Technik müssen jedoch zur Durchführung der aktivierten alkalischen Lactampolymerisation die Lösungen des Aktivators und des Katalysators separat verwendet werden.

Eine bevorzugte Vorgehensweise dabei ist, dass man zunächst eine homogene Lösung des Aktivators und gegebenenfalls weiterer Zusätze in einer wasserfreien Lactamschmelze herstellt und in einem weiteren Verfahrensschritt zur Auslösung der Polymerisationsreaktion den bevorzugt in Lactam gelösten Katalysator zufügt und in der Schmelze homogen verteilt.

Dabei werden an die Wasser- und Sauerstoff-Freiheit der Lösungen hohe Anforderungen gestellt: die Mischung im Reaktionsgefäss und die Verarbeitung müssen unter trockenem Inertgas erfolgen.

Da für hinreichend kurze Reaktionszeiten im Verfahren in jedem Fall neben dem Katalysator auch aktivierende Beschleuniger notwendig sind, muss nach genau festgelegten Vorgehensweisen verfahren werden.
So werden in den bekannten Verfahren im allgemeinen volumengleiche Schmelzen, die entweder Katalysator oder Aktivator gelöst enthalten, hergestellt, vor dem Verarbeitungsschritt vermischt und die Schmelze dadurch aktiviert, das heisst, ein beschleunigter Polymerisationsschritt eingeleitet. Der Nachteil dieser Verfahren ist, dass zwei verschiedene Schmelzen in zwei Gefässen aufbereitet werden müssen, wobei die katalysatorhaltige Schmelze auch in Abwesenheit des Aktivators nur eine beschränkte Verwendungszeit besitzt. Nach dem Zusammengeben bleibt nur noch eine beschränkte offene Zeit für die Verarbeitung, in der die Schmelze hinreichend niederviskos ist, so dass keine Zwischenlagerung der aktivierten Schmelze mehr möglich ist und die Formgebung, zum Beispiel im Giessprozess. unmittelbar zu erfolgen hat.

In anderen Verfahren ist je ein Gefäss mit einer den Katalysator beziehungsweise Aktivator enthaltenden Schmelze zu leeren, diese in einem Mischschritt kontinuierlich zu vermischen und die so aktivierte Schmelze anschliessend direkt zu verarbeiten.
Auch hierbei bleibt die Problematik der eingeschränkten Lagerfähigkeit der Schmelzen unverändert bestehen.

In weiteren Verfahren nach dem Stand der Technik, z.B. nach **US 3,575,938**, werden der Aktivator und wahlweise trockene Zusätze, wie z.B. Fasern, in die Lactamschmelze eingemischt und in einem Folgeschritt eine Katalysatorlösung zugefügt und durch intensives Mischen homogen verteilt. Diese Art des Zufügens und Verteilens wird erleichtert, wenn mit einer Katalysatorlösung gearbeitet werden kann. Das Verfahren bleibt aber weiterhin mehrstufig.

Die Aufgabe der vorliegenden Erfindung ist es, die Nachteile des Standes der Technik durch ein kontinuierliches Verfahren unter Verwendung eines geeigneten Katalysator-System zu überwinden und die anionische Lactampolymerisation dadurch zu vereinfachen und technisch leichter nutzbar zu machen.

Diese Aufgabe wird durch folgendes kontinuierliche Verfahren zur aktivierten anionischen Lactampolymerisation: Kontinuierliches Verfahren zur aktivierten Lactampolymerisation unter Inertgas mit den Schritten,
- Zuführen von Lactam sowie Katalysator und Aktivator für die anionische Lactampolymerisation, unter wasserfreien Bedingungen zu einer heizbaren kontinuierlich arbeitenden Misch- und Fördereinrichtung,
- Aufheizen des Lactams auf die Verfahrenstemperatur unter kontinuierlichem Mischen der Schmelze und mindestens teilweiser Polymerisation,
- kontinuierlicher Formgebung in einem Werkzeug oder Austragen der Schmelze als Strang, Kühlung und Granulierung
dadurch gekennzeichnet, dass
die Zuführung von Aktivator und Katalysator in eine wasserfreie Lactamschmelze durch kontinuierliches Zudosieren eines Flüssigsystems erfolgt, in dem Aktivator und Katalysator gemeinsam enthalten sind und welches bei Raumtemperatur flüssig ist, wobei das Flüssigsystem erhältlich ist durch Umsetzung von
a) 20 bis 80 Gew.Teilen
   a1) mindestens einer N- disubstituierten Carbonsäureamid- Verbindung und/oder
   a2) mindestens einer N,N'- disubstituierten Harnstoff- Verbindung,
   welche beide auch einen durch ihre Substituenten gebildeten heterocyclischen Ring enthalten können, als Basiskomponente und Lösungsmittel,
b) 5 bis 30 Gew.Teilen mindestens eines Alkali- oder Erdalkali- Lactamats als Katalysator,
c) 5 bis 30 Gew.Teilen mindestens eines Aktivators,
wobei sich a), b) und c) zu 100 Gew.Teilen ergänzen
und gegebenenfalls
d) Additiven.

Sie wird insbesondere gelöst, durch ein Verfahren, das unter Verwendung eines lagerstabilen, bei Raumtemperatur flüssigen Systems, welches zugleich Aktivator und Katalysator für die anionische Lactampolymerisation enthält, kontinuierlich durchgeführt werden kann, die Verwendung getrennter Lösungen von Aktivator resp. Katalysator unnötig macht und dadurch der aktivierten alkalischen Lactampolymerisation eine wesentliche Erweiterung in den Anwendungen, den Rezepturen und in den formgebenden Verfahrensschritten sichert.
Besonders vorteilhaft ist dabei dass neben dem Aktivator/Katalysator-Flüssigsystem nur das Lactam beziehungsweise seine reine, lagerstabile Schmelze bereitgestellt werden muss, die unmittelbar vor der Formgebung durch die kontinuierliche Zugabe nur dieses einen Flüssigsystems sowohl katalysiert, als auch aktiviert wird.

Das erfindungsgemässe Verfahren wird für alle Lactame, bevorzugt für Caprolactam und Önantholactam und besonders für Laurinlactam eingesetzt.

Bei mechanischer Energieeinleitung verteilt sich das flüssige System rasch und gleichmässig in der Lactamschmelze und löst die Polymerisation homogen und schnell aus.

Dies bedeutet insbesondere für Laurinlactam, das wegen seines hohen Schmelzpunktes von knapp 160°C als Schmelze im Bereich von mindestens 160°C gelagert werden muss und bei Anwesenheit von Katalysator bei dieserTemperatur in seiner Lagerfähigkeit stark eingeschränkt ist, einen wesentlichen Vorteil.

Für das erfindungsgemässe Verfahren genügt somit ein einziger Vorratsbehälter für das geschmolzene reine Lactam, welches, frei von Katalysator oder Aktivator, unter Inertgas gut lagerfähig ist.

Das erfindungsgemässe kontinuierliche Verfahren eignet sich durch die Verwendung des Flüssigsystem hervorragend, ebenfalls für die kontinuierliche Formgebung der polymerisierten Schmelze der Polylactame, besonders von Polycaprolactam und Polyönantholactam und insbesondere von Polylaurinlactam und ihrer Gemische, die wegen der hohen Polymerisationsgeschwindigkeit des Verfahrens möglich wird.

Das im erfindungsgemässen Verfahren einer wasserfreien Lactamschmelze zuzusetzende Flüssigsystem besteht in wesentlichen aus
a) 20 bis 80 Gew. Teilen
   a1) mindestens einer N-disubstituierten Carbonsäureamidverbindung und/oder
   a2) mindestens einer N,N'-disubstituierten Harnstoff-Verbindung,
   die beide auch einen durch ihre Substituenten gebildeten heterocyclischen Ring enthalten können, als Basiskomponente und Lösungsmittel,
b) 5 bis 30 Gew. Teilen mindestens eines Alkali- oder Erdalkali-Lactamats als Katalysator,
c) 5 bis 30 Gew. Teilen mindestens einer die anionische Lactampolymerisation aktivierenden Verbindung,
wobei sich a), b) und c) zu 100 Teilen ergänzen
und gegebenenfalls aus
d) verarbeitungs- oder anwendungsbedingten Additiven und Zusätzen, die die Polymerisation nicht beeinträchtigen oder aber im gewünschten, voraussehbaren Mass beeinflussen und mit den Komponenten a), b) und c) verträglich sind.

N,N'-disubstituierte Harnstoff-Verbindungen a2) sind beispielsweise unter CAS 80-73-9 und CAS 7226-23-5 registriert und in der BASF-Firmenschrift "BASF-Zwischenprodukte, 1993" beschrieben.

N-substituierte Carbonsäureamid-Verbindungen a1) und Alkali- und Erdalkali-Lactamate b) sind in der ***US-A-3,575,938*** beschrieben.

Bevorzugte aktivierende Verbindungen c) sind verkappte, besonders mit Lactam verkappte Isocyanate, Carbodiimide, acylierte Lactame, sowie Oxazoline und Oxazolin-Derivate, insbesondere Fettalkyloxazoline und deren Umsetzungsprodukte mit Isocyanaten. Solche Produkte sind z.B. beschrieben in *Farben und Lacke*, *1993/11, S.911 - 915.*

Im erfindungsgemässen Verfahren wird einem Vorratsbehälter kontinuierlich reines, wasserfreies Lactam unaufgeschmolzen oder als Schmelze entnommen und einer kontinuierlich arbeitenden Förder- und Schmelzemisch-Vorrichtung mit mehreren Behandlungszonen, bevorzugt einem Doppelwellenextruder mit gleichlaufenden Schnecken, zugeführt.
Somit wird entweder die Schmelze des Lactams kontinuierlich gemischt und gefördert oder dieses zunächst kontinuierlich aufgeschmolzen, gemischt und gefördert.
Dabei wird vorteilhaft mit intensiver Durchmischung der Schmelze das Flüssigsystem in einem konstanten Anteil zwischen 0,5 und 15 Gew.-Teilen zu 100 Teilen Lactam zugeführt.

Durch Anhebung der Temperatur in den nachfolgenden Behandlungszonen, bevorzugt auf 200 bis 320°C, insbesondere auf 240 bis 290°C wird die Polymerisation so stark beschleunigt, dass sie innerhalb von z.B.100 bis 200 Sekunden abläuft.

In einer bevorzugten Ausführungsform durchläuft das Polymerisationsverfahren einen Entgasungsschritt, in dem flüchtige Komponenten aus der Schmelze, flüchtige Reaktionsnebenprodukte und unumgesetztes Lactam unter Atmosphärendruck oder wahlweise unter vermindertem Druck oder unter Vakuum entfernt werden können.
In einem letzten Verfahrensschritt tritt die polymerisierte Schmelze aus der Vorrichtung, bevorzugt aus einem Extruder, durch eine Ein- oder Mehrlochdüse aus, wonach die entstehenden Polymerstränge minestens unter ihren Schmelzpunkt abgekühlt und als Monofil abgezogen und nach Zerkleinern, z.B. zu bevorzugt zylinderförmigem Granulat, der späteren Weiterverarbeitung beispielsweise durch Spritzguss oder Extrusion zugeführt werden können.
In einer wesentlichen Verfahrensvariante wird die polymerisierte Schmelze direkt durch ein formgebendes Werkzeug ausgetragen und insbesondere als Monofil. Rohr oder Profil nach bekannten Verfahren aus dem Stand der Technik abgezogen und der Direktverwendung zugeführt.

In einer weiteren Verfahrensvariante werden der frisch aktivierten Schmelze, die zunächst noch hinreichend niederviskos und dünnflüssig ist, zusätzlich verarbeitungs- und/oder verwendungsbedingte Additive zugesetzt. Selbstverständlich können diese, bereits dem zuzuführenden Lactam oder auch in jedem späteren Verfahrensschritt direkt oder als Masterbatch in den Schmelzestrom eingemischt werden.

Als Additive und Zusätze d) werden bevorzugt eingesetzt:
aus dem Stand der Technik bekannte Verarbeitungshilfsmittel, Weichmacher, Licht- und Hitzestabilisatoren, Antioxidantien, spezielle Antiflammverbindungen, optische Aufheller, Pigmente, Farbstoffe, Tracer und Duftstoffe.

Im erfindungsgemässen Verfahren wird ein aktivierter katalysatorhaltiger Schmelzestrom erzeugt, der durch Anpassung der Anteilmenge des flüssigen Systems, der Temperaturführung und der Verweilzeit im Extruder gezielt mindestens so weit polymerisiert wird, dass er, gegebenenfalls unter Zwischenschalten von Verfahrensschritten zur Zugabe weiteter Komponenten des Systems oder Schmelzeentgasung direkt einem formgebenden Werkzeug zugeführt werden und dort gegebenenfalls auspolymerisiert werden kann.

Die Vorteile des erfindungsgemässen Verfahrens sind:
- die aktivierte anionische Lactampolymerisation ist wirtschaftlich und reproduzierbar ausführbar,
- sie kann kontinuierlich, bevorzugt in einem Doppelwellenextuder durchgeführt werden,
- unter Anwendung eines Flüssigsystems, welches zugleich Aktivator und Katalysator enthält, lassen sich homogene Polylactame in konstanter Qualität herstellen,
- die Umsetzung des Lactams verläuft rasch und homogen und ist nach 100 bis 200 Sekunden weitgehend beendet,
- das Verfahren kann direkt durch kontinuierliche Formgebungsprozesse ergänzt werden,
- das Polymerisationsverfahren erfordert einen deutlich geringeren technischen Aufwand als die hydrolytische Polymerisation,
- die thermische Belastung des Polymeren ist wesentlich kleiner.

Das erfindungsgemässe Verfahren kann auf vielfältige Weise erweitert und angewendet werden. Um konstante, gute Polymereigenschaften zu erzielen, ist es vorteilhaft, unter Inertgas und Ausschluss von Feuchtigkeit zu arbeiten. Das ist besonders für die Zuführung des Lactams und der Additive und Seitenstromprodukte zu beachten, gilt jedoch auch für Entgasungsdome und die Austragszone.
In vorteilhafter Weise können in geeigneten Doppelwellenextrudern, z.B. den als ZSK-Maschinen bezeichneten Typen der Fa. Werner und Pfleiderer, Stuttgart (D), zusätzliche Verfahrensaufgaben ausgeführt werden.

Als bevorzugte Verfahrensvariante werden beispielsweise anschliessend an den erfindungsgemässen, schnell ablaufenden Polymerisationsprozess Zusätze in die Schmelze eingetragen und darin verteilt oder gegebenenfalls mit der Schmelze zur Reaktion gebracht.
So können z.B. durch geeignete Zuführungen z.B. über einen fördernden und druckaufbauenden, insbesondere zweiwelligen Seitenextruder Fremdpolymer, das z.B. als Schlagzähmodifikator oder polymerer Weichmacher wirkt, oder aber Antiflammittel, Mineralstoffe, Fasern, wie z.B. Glasfasern, Kohlenstoffasern und Aramid-fasern kontinuierlich in den frisch erzeugten Polymerschmelzestrom eingetragen werden.

Weitere Additive und Zusätze mit spezieller Funktion, z.B. mit stabilisierender Wirkung sind ausgewählt aus der Gruppe Alkohole, Phenole, insbesondere sterisch gehinderte Phenole, aliphatische und aromatische Amine, Silane, Markierungsmittel, Komplexbildner, Antistatika, Carbonsäureamide und Carbonsäureester und Tenside.
Sie können als Komponenten des Flüssigsystems. zusammen mit Weichmacher oder aber separat dem Schmelzestrom oder aber dem Lactamausgangsprodukt zugefügt werden.

In einer anderen bevorzugten Ausführungsvariante ist als weiterer Verfahrensschritt eine thermische Nachbehandlung des Polylactams, z.B. knapp unterhalb dessen Schmelzpunkt und vorteilhaft unter trockenem Inertgas oder in einer inerten Flüssigkeit vorgesehen. Nach dem Stand der Technik ist es dadurch möglich, die Endeigenschaften der Polymeren zu verbessern, insbesondere den Restlactamanteilzu reduzieren.
Für PA6 werden dafür Temperaturen von maximal 220°C und für PA12 von maximal 170°C angewendet.

In weiteren Varianten wird das Verfahren ausschliesslich zur Polymerisation und gegebenenfalls zur Modifikation mit Weichmachern, welche die Polymerisation nicht beeinträchtigen, in sog. Einwellen-Extrudern durchgeführt. Dazu werden bevorzugt sogenannte Mehrzonenschnecken mit geeigneter Ausgestaltung der Zonen oder sogenannte Barriereschnecken, z.B. der Firma Maillefer, Ecublens (CH), eingesetzt.
Bei der Verwendung von Einwellen-Extrudern werden zur Dosierung und Zwangsförderung der Lactamschmelze vorteilhaft Pumpen, bevorzugt Zahnradpumpen, mitverwendet.
Die kontinuierliche Zudosierung des Flüssigsystems, gegebenenfalls zusammen mit dem Weichmacher und weiteren Additiven erfolgt dann bevorzugt kurz vor Eintritt in den Extruder.

Das erfindungsgemässe Verfahren wird nachfolgend beispielhaft erläutert. Der Umfang der Erfindung ist dadurch jedoch in keiner Weise eingeschränkt.

### Beispiele

Zur Herstellung des Flüssigsystems ist das Arbeiten unter Schutzgas-Atmosphäre zwingend notwendig.
In einem Gefäss mit Innentemperaturmessung wird die Komponente a) vorgelegt und auf 60 bis maximal 80°C erwärmt.
Danach wird unter Rühren die Komponente c) eingetragen und homogen gemischt. Nach Entstehen einer klaren Lösung werden unter Kontrolle der Temperatur, welche 90°C nicht überschreiten darf, die Komponente b) und gegebenenfalls anschliessend die Additive d) zugegeben.
Die resultierenden Lösungen sind bei Raumtemperatur flüssig und lagerstabil. Sie verkrusten verschlacken auch an trockener Luft nicht.

**Tabelle 1:**

| **Flüssige Systeme** Beispiele 1 bis 3 ***Komponenten*** | | | | | | | | | | | |
|---|---|---|---|---|---|---|---|---|---|---|---|
| **No** | **a** | **Teile** | **b** | **Teile** | **c** | **Teile** | **d** | **Teile** | **e** | **Teile** | **Bemerkungen** |
| **1** | DMPU | 50 | NaCL | 20 | CD | 20 | -- | -- | -- | -- | gelblich, bis 0°C flüssig |
| **2** | DPMU | 50 | NaCL | 58 | Bis-Ox | 58 | -- | -- | -- | -- | gelblich, bis 0°C flüssig |
| **3** | NMP CL | 50 12,5 | NaCL | 12,5 | CL-MDI | 12,5 | -- | -- | -- | -- | gelblich, bis 0°C flüssig |
| DMPU: N,N'-Dimethylpropylenharnstoff, BASF, Ludwigshafen ( D ) | | | | | | | | | | | |
| NaCL: Natrium-Caprolactamat, Pacast AG, Sargans (Schweiz) | | | | | | | | | | | |
| Bis-Ox: Ricinylbisoxazolin, Loxamid 8523 ( R), Henkel KG, Düsseldorf (BRD) | | | | | | | | | | | |
| CL-MDI: caprolactamverkapptes Methylenbisphenylisocyanat, Grilbond IL6 (R), Ems-Chemie AG, Domat/Ems (Schweiz) | | | | | | | | | | | |
| CD: Bis-(2,6-diisopropylphenyl-)carbodiimid, Stabilisator 7000 (R), Raschig, Ludwigshafen (BRD) | | | | | | | | | | | |
| NMP: N-Methyl-2-pyrrolidon, | | | | | | | | | | | |
| CL: Caprolactam | | | | | | | | | | | |

### Referenz-Beispiele 4-6:

Zur Verwendung der Flüssigsysteme zur Auslösung der aktivierten anionischen Lactampolymerisation wurde wie folgt vorgegangen: In einem Glasgefäss wird unter Stickstoff-Atmosphäre eine Lactamschmelze vorgelegt und bei 170°C unter Rühren das Flüssigsystem eingetragen und dadurch die Polymerisation ausgelöst. Danach wird der Rührer entfernt und die Schmelze bei 170°C während einer Stunde polymerisiert.

**Tabelle 2:**

| **Lactampolymerisation** Beispiele 4 bis 6 ***Komponenten*** | | | | | | | |
|---|---|---|---|---|---|---|---|
| **No** | **Lactam** | **Teile** | **System** gemäss | **Teile** | **Sekunden** tᵤ | **Smp.Polymer** | **Bemerkungen** |
| **4** | Laurinlactam | 50 | Beispiel 1 | 1 | 100 | 172°C | keine Verfärbung |
| **5** | Laurinlactam | 50 | Beispiel 2 | 1 | 20 | 173°C | keine Verfärbung |
| **6** | Laurinlactam | 50 | Beispiel 3 | 0,5 | 15 | 172°C | keine Verfärbung |
| tᵤ: Zeit bis zum Unrührbarwerden der Schmelze | | | | | | | |

### Beispiele 7 bis 21

In der gleichen Weise, wie in den Beispielen 1 bis 3 werden weitere Flüssigsysteme hergestellt, deren Zusammensetzung in Tabelle 3 aufgeführt ist.

In Tabelle 4 sind Angaben zur Durchführung und Resultate der aktivierten anionischen Lactampolymerisation der Flüssigsysteme zusammengefasst.

Das Vorgehen ist das gleiche wie in den Versuchen 4 bis 6. Nach dem Unrührbarwerden der Schmelze wurde noch 60 Minuten bei der angegebenen Polymerisationstemperatur weiter polymerisiert, dann wurden die Lösungsviskosität und der Schmelzpunkt des Polymeren gemessen.

Der Rest-Extrakt aller Polymeren lag deutlich unter 1 Gew.%.

Der Vergleich der unterschiedlichen Zeiten tᵤ zeigt, dass die Polymerisationsgeschwindigkeit durch die Zusammensetzung des Flüssigsystems beeinflusst und damit die Polymerisation gesteuert werden kann

**Tabelle 3:**

| **FLÜSSIGSYSTEME** | | | | | | | | |
|---|---|---|---|---|---|---|---|---|
| **No** | **Komponente a)** | **Teile a)** | **Komponente b)** | **Teile b)** | **Komponente c)** | **Teile c)** | **Komponente d) *)** | **Teile d)** |
| **7** | NMP | 50 | Na-CL | 16.6 | CL-MDI | 16.6 | | |
| | CL | 16.8 | | | | | | |
| **8** | NMP | 30 | Na-CL | 30 | Bis-Ox | 10 | Rc-Ox | 30 |
| **9** | NMP | 6.6 | Na-CL | 6.6 | PCD | 6 6 | DOS | 80.2 |
| **10** | NOP | 50 | Na-CL | 25 | CD | 25 | | |
| **11** | DMI | 50 | Na-CL | 25 | CD | 25 | | |
| **12** | DMI | 60 | Na-LL | 20 | CD | 20 | | |
| **13** | DMPU | 50 | Na-CL | 30 | CL-MDI | 20 | | |
| **14** | DMPU | 48 | Na-CL | 19 | CL-MDI | 19 | PA | 14 |
| **15** | DMPU | 30 | Na-CL | 35 | Bis-Ox | 35 | | |
| **16** | TBH | 30 | | | | | | |
| | NMP | 30 | Na-CL | 20 | CD | 20 | | |
| **17** | TEH | 55 | Na-CL | 25 | CL-MDI | 20 | | |
| **18** | TMH | 40 | | | | | | |
| | NMP | 20 | Na-CL | 20 | CL-MDI | 20 | | |
| **19** | TMH | 30 | | | | | | |
| | TBH | 30 | Na-CL | 20 | Bis-Ox | 20 | | |
| **20** | TMH | 20 | | | | | | |
| | TBH | 20 | | | | | | |
| | NMP | 20 | Na-CL | 20 | CD | 20 | | |
| **21** | DMPU | 77 | Na-CL (100%) | 11.7 | DCC | 11.3 | | |

| | | | | | | | | |
|---|---|---|---|---|---|---|---|---|
| )* die Komponente d) umfasst zusätzlich ca. 70 Gew % der Komponente b) (des Lactam-Anteils) CL: Caprolactam LL: Laurinlactam NMP: N-Methyl-2-pyrrolidon BASF Ludwigshafen (D) NOP: N-Octyl-2-pyrrolidon PCD: Polycarbodiimid Stabaxol P (R) Rhein Chemie GmbH. Mannheim (D) DOS: Dioctylsebacat Edenol 888 (R), Henkel KG, Düsseldorf (D) PA: Phenolisches Antioxidant Irganox 1135 (R), Ciba-Geigy AG, Basel ( CH ) DMPU: N,N'-Dimethylpropylenharnstoff, BASF, Ludwigshafen (D) DMI: N,N'-Dimethylethylenharnstoff, Siebner Hegner Rohstoffe, Zürich (CH) TBH: Tetrabutylharnstoff BASF, Ludwigshafen ( D ) TEH: Tetraethylharnstoff Fluka AG, Buchs ( CH ) TMH: Tetramethylharnstoff Fluka AG, Buchs ( CH ) Na-CL: Natrium-Caprolactamat in Caprolactam, ca.30 Gew.% Natriumlactamat-Gehalt, Pacast AG, Sargans ( CH Na-LL Natrium -Laurinlactamat in Laurinlactam; ca 30 Gew.% Laurinlactamat-Gehalt CD: Bis-(2,6-diisopropylphenyl)carbodiimid. Stabilisator 7000 (R), Raschig AG. Ludwigshafen ( D ) CL-MDI: Caprolactam-verkapptes Methylendiisocyanat, Grilbond IL6 (R), Ems-Chemie AG, Domat/Ems (CH) Bis-Ox: Ricinyl-bisoxazolin, Loxamid 8523 (R) Henkel KG, Dusseldorf (D) Rc-Ox: Ricinyl-oxazolin Loxamid 8513 (R), Henkel KG, Dusseldorf ( D ) DCC: Dicyclohexylcarbodiimid, Toyo Kasei Kogyo, Osaka, ( J ) | | | | | | | | |

**Tabelle 4:**

| Verwendung der Flüssigsysteme der Beispiele 7 bis 21 zur Lactampolymerisaion (Referenz beispiele) | | | | | | |
|---|---|---|---|---|---|---|
| **Flüssigsystem** | **Teile** | **Lactam** | **T** °C | **t**_{**u**} sec | **Smp** °C | **relative Viskosität** |
| **7** | 6 | CL | 140 | 70 | 211 | |
| **8** | 3 | LL | 175 | 10 | 170 | |
| **9** | 10 | LL | 175 | 320 | 176 | |
| **10** | 3 | LL | 175 | 120 | 172 | |
| **11** | 3 | LL | 175 | 80 | 175 | |
| **12** | 3 | LL | 175 | 60 | 172 | |
| **13** | 3 | LL | 175 | 22 | 172 | |
| **14** | 3 | LL | 175 | 90 | 170 | |
| **15** | 3 | LL | 175 | 10 | 171 | |
| **16** | 3 | LL | 200 | 200 | 173 | 3.05 |
| **17** | 3 | LL | 200 | 10 | 169 | nmb |
| **18** | 3 | LL | 200 | 8 | 166 | nmb |
| **19** | 3 | LL | 200 | 14 | 166 | 6.0 |
| **20** | 3 | LL | 200 | 200 | 172 | 2.9 |
| **21** | 3 | LL | 200 | 200 | 175 | 2.9 |
| T: Polymerisationstemperatur tu: Zeit bis zum Unrührbar-Werden der Schmelze Smp °C: DSC-Schmelzpunkt des Polymeren Relative Lösungsviskosität des Polymeren: 0,5%-ig in m-Kresol nmb: sehr hohe Viskosität; in der Praxis nicht messbar | | | | | | |

### Referenz-Beispiel 22

Mit dem Flüssigsystem 21 wurde für einen Umsatz des Lactams von über 99 Gew.% die Abhängigkeit der Zeit Gesamtpolymerisationszeit **t**_{**u**} von der Polymerisationstemperatur T erfasst.

**Tabelle 5**

| | | | | | | |
|---|---|---|---|---|---|---|
| Polymerisationstemperatur T [°C] | 170 | 190 | 210 | 230 | 250 | 270 |
| Gesamtpolym.-Zeit [sec] | 3500 | 1500 | 900 | 500 | 270 | 170 |

In weiteren Versuchen wurden Mineralien. Farbpigmente, Entformungsmittel und Stabilisatoren in die Lactam 12-Schmelze eingetragen und diese unter Zusatz von 3 Gew.% des Flüssigsystems aus Beispiel 21 polymerisiert.

So wurden als gut vorgetrocknete, feingemahlene organische Stoffe Mg(OH)2 . Ca(OH)2. Kaolin, Mikrotalk und CaCO3 eingesetzt und 20 Minuten bei 220°C polymerisiert.
Dabei resultierten Polymerisate mit relativen Lösungsviskositäten zwischen 2.0 und 2.5.

Bei Verwendung von Antioxydantien wie z.B Irganox 245, Irgafos 168, Tinuvin 770 von Ciba-Geigy zeigte sich, dass die Konzentration von 0,5 Gew% solcher Stabilisatoren nicht überschritten werde sollte, sofern sie aktive H-Atome aufweisen, die sterisch nicht hinreichend abgeschirmt sind
Bei Entschäumern und Formtrennmitteln werden vorteilhaft Mengenanteile von deutlich weniger als 1 Gew % eingesetzt
So genügt schon 0.05 Gew % des Entformungsmittel Brüggolen P-12 der Fa. Brüggemann, Heilbronn ( D )für eine einwandfreie Entformung der Formteile.

### Kontinuierliche Versuche auf einem Doppelwellenextruder

Die vorangehenden Versuche haben nun gezeigt, dass der Polymerisationsverlauf durch gezielte Änderung der Zusammensetzung des Flüssigsystems und der Temperaturführung wesentlich beeinflusst werden kann
Beim Lactam 12 kann so die Polymerisation durch Erhöhung der Temperatur wesentlich beschleunigt werden ohne dass dabei der Restlactamgehalt, wie im Falle von Lactam-6 wohlbekannt, ansteigt.

Um die spezielle Eignung des erfindungsgemässen Verfahrens aufzuzeigen, wurde daher ein kontinuierlich ablaufender Polymerisationsprozess auf einem gleichlaufenden

Doppelwellenextruder, einer ZSK30 mit einem I/d-Verhältnis von 32 der Firma Werner und Pfleiderer, Stuttgart, D, durchgeführt. Es wurden dabei die in Tabelle 6 aufgeführten Flüssigsyssteme verwendet.

**Tabelle 6:**

| **No** | **Komponente a)** | **Teile a)** | **Komponente b)** | **Teile b)** | **Komponente c)** | **Teil. c)** | **Komponente d)** | **Teile d)** |
|---|---|---|---|---|---|---|---|---|
| **23** | **DMPU** | **50** | **Na-CL** | **25** | CL-MDI | 25 | | |
| **24** | **DMPU** | **50** | **Na-CL** | **25** | Bis-Ox | 25 | | |
| **25** | **DMPU** | **50** | **Na-CL** | **20** | Bis-Ox/CD | 15/7.5 | **E.W.3005** | 37.5 |

Die Komponenten a), b) und c) entsprechen dabei wohlbekannten Produkten gemäss Tabelle 3. E.W.3005 bedeuted Edenol W3005 und ist ein Esterweichmacher der Firma Henkel AG, Düsseldorf, D.

Aus Versuch 22, 23, 24 resultieren stabile Flüssigsysteme, welche die Polymerisation von Lactam-12 ausgezeichnet auszulösen vermögen. Komponente d) aus Versuch 24 dient zusätzlich der Weichmachung, und das System ist so aufgebaut, dass es dazu in höherem Anteil zugefügt werden muss.

Bei der kontinuierlichen Extruderpolymerisation wurde das Lactam in der Einzugszone des Extruders aufgeschmolzen und danch das Flüssigsystem in einem definierten Gewichtsanteil kontinuierlich, unter intensivem Mischen der Lactamschmelze zugefügt.

Die Daten dieser Versuche sind in Tabelle 7 zusammengefasst.

**Tabelle 7:**

| | **Versuch Nr.** | **26** | **27** | **28** | **29** | **30** | **31** |
|---|---|---|---|---|---|---|---|
| **Rezeptur** | Lactam-12 % | 92 | 95,6 | 95,6 | 87 | 90 | 92 |
| | Flüssigs. 22 % | 8 | | | | | |
| | Flüssigs. 23 % | | 4,4 | 4,4 | | | |
| | Flüssigs. 24 % | | | | 13 | 10 | 8 |
| **Verfahrensparameter** | Drehzahl UPM | 100 | 100 | 100 | 150 | 150 | 150 |
| | Durchsatz kg/h | 3,8 | 6,8 | 6,8 | 6,7 | 8,7 | 10,87 |
| | mittl. Massetemperatur [°C] | 300 | 300 | 278 | 258 | 260 | 260 |
| **Polymer- Eigenschaften** | rel. Lösungsviskosität | 2,18 | 2,34 | 2,60 | 1,58 | 1,87 | 1,98 |
| | SMP [°C] | 163 | 164 | 158 | | | |
| | Extrakt % ^{**1)**} | | | | - | 10,2 | 14,8 |

| | | | | | | | |
|---|---|---|---|---|---|---|---|
| ^{**1)**} **Der Extraktgehalt beinhaltet auch den Weichmacher von Versuch 24, des E.W.3005** | | | | | | | |

Es handelt sich hier um einige beispielhafte Versucheinstellungen und Ergebnisse aus der Vielzahl der durchgeführten Versuche In allen Fällen resultieren homogene, gut granulierbare Extrusionsstränge. Versuche mit getrockneten Mineralien und mit Schnittglas sowie die vielfältigen Variationsmöglichkeiten des Doppelwellenextruders zeigen, dass die zunächst ablaufende Polymerisation des Lactams anschliessend kontinuierlich mit einer Vielzahl von Verfahrenschritten, wie mineral- und glasverstärken, einfärben, stabilisieren, antiflamm- und schlagzähausrüsten und Kombinationen dieser Möglichkeiten ergänzt werden kann.

Granulate aus diesem kontinuierlichen Polymerisationsprozess können wieder aufgeschmolzen und z B im Spritzgussverfahren weiterverarbeitet werden. Wegen des kontinuierlichen Ablauf des Prozesses ist es aber auch möglich, den Ausgang des Extruders direkt mit einem fromgebenden Werkzeug zu bestücken und so direkt z.B. glasverstärkte Profile oder auch weichgemachte Rohre herzustellen, die auch thermisch nachbehandelt, aber auch nachverformt werden können.

## Patentansprüche

1. Kontinuierliches Verfahren zur aktivierten Lactampolymerisation unter Inertgas mit den Schritten,
• Zuführen von Lactam sowie Katalysator und Aktivator für die anionische Lactampolymerisation, unter wasserfreien Bedingungen zu einer heizbaren kontinuierlich arbeitenden Misch- und Fördereinrichtung,
• Aufheizen des Lactams auf die Verfahrenstemperatur unter kontinuierlichem Mischen der Schmelze und mindestens teilweiser Polymerisation,
• Kontinuierlicher Formgebung in einem Werkzeug oder Austragen der Schmelze als Strang mit nachfolgender Kühlung und Granulierung
dadurch gekennzeichnet, dass
die Zuführung von Aktivator und Katalysator in eine wasserfreie Lactamschmelze durch kontinuierliches Zudosieren eines Flüssigsystems erfolgt, in dem Aktivator und Katalysator gemeinsam enthalten sind und welches bei Raumtemperatur flüssig ist, wobei das Flüssigsystem erhältlich ist durch Umsetzung von
a) 20 bis 80 Gew.Teilen
a1) mindestens einer N-disubstituierten Carbonsäureamid-Verbindung und/oder
a2) mindestens einer N,N'-disubstituierten Harnstoff-Verbindung,
welche beide auch einen durch ihre Substituenten gebildeten heterocyclischen Ring enthalten können, als Basiskomponente und Lösungsmittel,
b) 5 bis 30 Gew.Teilen mindestens eines Alkali- oder Erdalkali-Lactamats als Katalysator,
c) 5 bis 30 Gew.Teilen mindestens eines Aktivators
wobei sich a), b) und c) zu 100 Gew.Teilen ergänzen
und gegebenenfalls
d) Additiven

2. Kontinuierliches Verfahren nach Anspruch 1,
dadurch gekennzeichnet, dass
Lactam, ausgewählt aus der Gruppe Caprolactam, Önantholactam, Laurinlactam und ihrer Gemische, eingesetzt wird.

3. Kontinuierliches Verfahren nach einem der vorhergehenden Ansprüche,
dadurch gekennzeichnet, dass
0,5 bis 15 Gew.Teile des Flüssigsystems zu 100 Gew.Teilen Lactamschmelze zugemischt werden.

4. Kontinuierliches Verfahren nach einem der vorhergehenden Ansprüche,
dadurch gekennzeichnet, dass
der Schmelze weitere Zusätze zugefügt werden.

5. Kontinuierliches Verfahren nach einem der vorhergehenden Ansprüche,
dadurch gekennzeichnet, dass
als Misch- und Fördermittel ein Doppelwellenextruder mit gleichlaufenden Schnecken, bzw. ein Cokneter oder ein Einwellenextruder mit vorgeschalteter Förderpumpe, eingesetzt wird.

6. Kontinuierliches Verfahren nach einem der vorhergehenden Ansprüche,
dadurch gekennzeichnet, dass
die Lactamschmelze im Extruder teilweise polymerisiert und während der Formgebung bzw. in einem Nachfolgeschritt unterhalb des Polylactamsschmelzpunktes auspolymerisiert wird.

7. Kontinuierliches Verfahren nach einem der vorhergehenden Ansprüche,
dadurch gekennzeichnet, dass
die Verfahrenstemperatur im Bereich von 200 bis 320°C liegt.

8. Kontinuierliches Verfahren nach einem der vorhergehenden Ansprüche,
dadurch gekennzeichnet, dass
eine Entgasung unter Atmosphärendruck oder vermindertem Druck erfolgt.

9. Kontinuierliches Verfahren nach einem der vorhergehenden Ansprüche,
dadurch gekennzeichnet, dass
die Formgebung zu Monofilen, Rohren, Platten oder Profilen erfolgt.

10. Kontinuierliches Verfahren nach einem der vorhergehenden Ansprüche,
dadurch gekennzeichnet, dass
die thermische Nachbehandlung, bevorzugt in Inertgas-Atmosphäre bei einerTemperatur unter dem Schmelzpunkt des Polylactams erfolgt.

11. Kontinuierliches Verfahren nach Anspruch 1,
dadurch gekennzeichnet, dass
als Nachbehandlung eine Flüssigextraktion erfolgt.

## Claims

1. Continuous process for activated lactam polymerisation in inert gas, comprising the following steps:
• supplying lactam, and catalyst and activator for the anionic lactam polymerisation, to a heatable, continuously operating mixing and conveying device under anhydrous conditions,
• heating the lactam to the process temperature, accompanied by continuous mixing of the melt and at least partial polymerisation,
• continuous moulding in a mould or discharging the melt as an extrudate, followed by cooling and pelletisation,
characterised in that
the activator and catalyst are fed into an anhydrous lactam melt by adding them continuously to a liquid system in which the activator and catalyst are jointly contained and which is liquid at room temperature, the liquid system being obtainable by reacting
a) 20 to 80 parts by wt.
a1) of at least one N-disubstituted carboxylic acid amide compound and/or
a2) of at least one N,N'-disubstituted urea compound,
both of which may also contain a heterocyclic ring formed by their substituents, as base component and solvent,
b) 5 to 30 parts by wt. of at least one alkali lactamate or alkaline earth lactamate as catalyst,
c) 5 to 30 parts by wt. of at least one activator,
where a), b) and c) add up to 100 parts by wt.,
plus, if appropriate,
d) additives.

2. Continuous process according to claim 1,
characterised by the use of lactam selected from the group comprising caprolactam, enantholactam, laurinlactam and mixes thereof.

3. Continuous process according to either of the preceding claims,
characterised in that 0.5 to 15 parts by wt. of the liquid system are added per 100 parts by wt. of lactam melt.

4. Continuous process according to any of the preceding claims,
characterised in that further additives are added to the melt.

5. Continuous process according to any of the preceding claims,
characterised in that a twin-screw extruder with corotating screws, or a co-compounder or a single-screw extruder with upstream pump, is employed as the mixing and conveying device.

6. Continuous process according to any of the preceding claims,
characterised in that the lactam melt is partially polymerised in the extruder and is fully polymerised during the moulding stage or in a downstream process step below the melting point of the polylactam.

7. Continuous process according to any of the preceding claims,
characterised in that the process temperature is within the range from 200 to 320 °C.

8. Continuous process according to any of the preceding claims,
characterised in that venting takes place under atmospheric pressure or reduced pressure.

9. Continuous process according to any of the preceding claims,
characterised in that moulding into monofilaments, pipes, sheets or profiles takes place.

10. Continuous process according to any of the preceding claims,
characterised in that the thermal after-treatment, preferably in an inert gas atmosphere, takes place at a temperature below the melting point of the polylactam.

11. Continuous process according to claim 1,
characterised in that liquid extraction takes place as an after-treatment.

## Revendications

1. Procédé continu pour la polymérisation activée de lactame, sous gaz inerte, comportant les étapes suivantes:
- envoi de lactame ainsi que de catalyseur et d'activateur pour la polymérisation anionique de lactame, dans des conditions anhydres, à un dispositif de mélange et de transport fonctionnant en continu et pouvant être chauffé,
- chauffage du lactame à la température de processus, avec mélange continu de la masse fondue et polymérisation au moins partielle,
- formage continu dans un outil ou extrusion de la masse fondue sous forme de boudin avec refroidissement et granulation subséquents,
caractérisé en ce que l'introduction de l'activateur et du catalyseur dans une masse fondue de lactame anhydre s'effectue par addition réglée continue d'un système liquide dans lequel sont contenus ensemble activateur et catalyseur et qui est liquide à la température ambiante, le système liquide pouvant être obtenu par la réaction de
a) 20 à 80 parties en poids
a1) d'au moins un composé de type carboxamide N-disubstitué et/ou
a2) au moins un composé de type urée N,N'-disubstituée,
qui peuvent l'un et l'autre comporter également un cycle hétérocyclique formé par leurs substituants, en tant que composant de base et solvant,
b) 5 à 30 parties en poids d'au moins un lactamate alcalin ou alcalino-terreux en tant que catalyseur,
c) 5 à 30 parties en poids d'au moins un activateur,
a), b) et c) constituant au total 100 parties en poids,
et éventuellement
d) d'additifs.

2. Procédé continu selon la revendication 1, caractérisé en ce que l'on utilise un lactame choisi dans l'ensemble constitué par le caprolactame, l'oenantholactame, le laurolactame et des mélanges de ceux-ci.

3. Procédé continu selon l'une des revendications précédentes, caractérisé en ce que l'on ajoute 0,5 à 15 parties en poids du système liquide à 100 parties en poids de la masse fondue de lactame.

4. Procédé continu selon l'une des revendications précédentes, caractérisé en ce que l'on ajoute d'autres additifs à la masse fondue.

5. Procédé continu selon l'une des revendications précédentes, caractérisé en ce que l'on utilise comme moyen de mélange et de transport une extrudeuse double vis à vis tournant dans le même sens ou un malaxeur Ko, ou bien une extrudeuse monovis à pompe d'alimentation placée en amont.

6. Procédé continu selon l'une des revendications précédentes, caractérisé en ce que la masse fondue de lactame est en partie polymérisée dans l'extrudeuse et est achevée d'être polymérisée pendant le formage ou dans une étape subséquente, au-dessous du point de fusion du polylactame.

7. Procédé continu selon l'une des revendications précédentes, caractérisé en ce que la température de processus se situe dans la plage allant de 200 à 320°C.

8. Procédé continu selon l'une des revendications précédentes, caractérisé en ce qu'un dégazage est effectué sous la pression atmosphérique ou sous une pression réduite.

9. Procédé continu selon l'une des revendications précédentes, caractérisé en ce que le formage est effectué en monifilaments, tubes, plaques ou profilés.

10. Procédé continu selon l'une des revendications précédentes, caractérisé en ce que le post-traitement thermique s'effectue de préférence dans une atmosphère de gaz inerte, à une température inférieure au point de fusion du polylactame.

11. Procédé continu selon la revendication 1, caractérisé en ce qu'une extraction de liquide est effectuée en tant que post-traitement.
